# EUROPÄISCHE PATENTANMELDUNG

(11) **EP 0 683 344 A1**
(43) Veröffentlichungstag der Anmeldung: **22.11.1995**
(21) Anmeldenummer: 95104548.3
(22) Anmeldetag: 28.03.1995
(51) Int. Cl.: F16L 23/16

(54) **Versorgungsleitung, insbesondere Gasleitung**

(30) Priorität: 20.04.1994 DE 4413767
(71) Anmelder: Jeschke, Immanuel, D-31157 Sarstedt (DE)
(72) Erfinder: Jeschke, Immanuel, D-31157 Sarstedt (DE)
(74) Vertreter: Junius, Walther, Dr.

(57) **Zusammenfassung**

Die Erfindung betrifft eine Versorgungsleitung (1), insbesondere Gasleitung, bestehend aus Rohren mit mindestens einem endseitig angeordneten Flansch (16), welcher mit Löchern für den Einbau von Flanschverbindungsmitteln (3,4) versehen ist. Die Erfindung besteht darin, daß der Flansch mit einer Radialbohrung (7) versehen ist, in deren Ende ein Innengewinde vorgesehen ist, daß die Radialbohrung (7) zwischen den Löchern für die Verbindungsschrauben (3) der Flansche (6) verläuft und daß die Radialbohrung (7) durch einen in das Innengewinde eingeschraubten Stopfen (8) verschlossen ist. Dieser Stopfen (8) kann ein Verschlußstopfen sein, er kann aber auch eine Axialbohrung aufweisen und ein mit Außengewinde versehenes Anschlußteil eines Ventiles, insbesondere eines Kugelhahnes sein oder ein mit Außengewinde versehenes Anschlußteil eines Meßgerätes oder Meßgebers sein.

## Beschreibung

Die Erfindung betrifft eine Versorgungsleitung, insbesondere Gasleitung, bestehend aus Rohren mit mindestens einem endseitig angeordneten Flansch, welcher mit Löchern für den Einbau von Flanschverbindungsmitteln versehen ist.

Versorgungsleitungen werden aus Rohren aufgebaut. Die Rohre sind in vielen Fällen an ihren Enden mit Flanschen versehen. Zum Bau der Versorgungsleitung werden die Flansche unter Einlage einer Dichtung zusammengeschraubt. Diese Versorgungsleitungen und in ihnen eingebaute Geräte bedürfen im Laufe der Zeit der Überprüfung. Hierzu ist es notwendig, das Innere der Versorgungsleitung mit der Umgebung der Leitung verschließbar zu verbinden. Dazu können von vornherein eingebaute T-Stücke oder nachträglich angebrachte Anbohrstutzen dienen. Beide sind nur mit erheblichem Aufwand anzubringen und zu montieren. Sie nehmen räumlich viel Platz ein und stören bei der Montage der Versorgungsleitung. Im rauhen Montagebetrieb können sie auch beschädigt werden.

Die Erfindung vermeidet die Nachteile der Erfindung. Es ist die Aufgabe der Erfindung, mit einfachen Mittel eine Möglichkeit zu schaffen, von vorneherein aber auch nachträglich eine Verbindung zwischen dem Rohrinneren und der Umgebung zu schaffen, die völlig geschützt ohne Raumbedarf und ohne äußeren Auftrag anzubringen ist.

Die Erfindung besteht darin, daß der Flansch mit einer Radialbohrung versehen ist, in deren Ende ein Innengewinde vorgesehen ist, daß die Radialbohrung zwischen den Löchern für den Einbau von Flanschverbindungsmitteln verläuft und daß die Radialbohrung durch einen in das Innengewinde eingeschraubten Stopfen verschlossen ist.

Dieser Stopfen kann ein Verschlußstopfen sein, er kann aber auch eine Axialbohrung aufweisen und ein mit Außengewinde versehenes Anschlußteil eines Ventiles, insbesondere eines Kugelhahnes sein oder ein mit Außengewinde versehenes Anschlußteil eines Meßgerätes oder Meßgebers sein.

Hierdurch ist erreicht, daß die Radialbohrung, der Stopfen und eventuell ein in die Radialbohrung eingebautes Ventil völlig geschützt im Inneren des Flansches liegen und daher weder beschädigt werden können noch irgendwelchen (zusätzlichen Raum einnehmen. Dabei ist die Radialbohrung und das in ihr angebrachte Innengewinde in äußerst einfacher Weise herzustellen, sei es bei der Herstellung des Flansche, bei der Herstellung des Flanschrohres oder nachträglich an einer bereits vorhandenen Leitung.

Um eine einwandfreie Verbindung der als Prüföffnung dienenden Radialbohrung mit dem Gasstrom in der Gasleitung zu schaffen und um Verfälschungen des Meßergebnisses durch Ejektoreffekte zu vermeiden ist es zweckmässig, wenn in die mit Gewinde versehene Innenwand des Flansches eine sich von der Radialbohrung nach außen erstreckende Nut eingearbeitet ist.

Zur Sicherung der Prüföffnung gegen unerlaubtes Öffnen ist es zweckmäßig, wenn der Stopfen und der Flansch mit einer Bohrung für das Durchziehen eines Plombendrahtes versehen sind.

Ein unerlaubtes Entfernen des Stopfens läßt sich dadurch verhindern, daß der Stopfen mit einer speziell geformten Ausnehmung für das Einstecken eines speziell geformten Inbusschlüssel versehen ist.

Ein Austritt von Gas bei der Stopfenentfernung und beim Ansetzen des Druckmeßgerätes sowie eine weitere Sicherung läßt sich dadurch erreichen, daß in das Innengewinde der Radialbohrung ein Ventil so tief eingeschraubt ist, daß der Stopfen ebenfalls in das Innengewinde einschraubbar ist, und daß der Ventilkörper mit einem Stößel für die Ventilöffnung versehen ist, der mit einem Ansatz an einem anstelle des Stopfens in das Innengewinde einschraubbaren Druckmeßgerät verschiebbar ist.

Bei dieser Ausführung ist es baulich zweckmäßig, daß die Radialbohrung einen Absatz aufweist und daß in den schmaleren Teil das Ventil und in den breiteren Teil der Stopfen eingeschraubt ist.

Ohne ein solches Ventil ist es zweckmäßig, wenn die Radialbohrung den Durchmesser eines Haarröhrchens aufweist.

Eine weitere günstige Ausgestaltungsmöglichkeit besteht darin, daß die mit Gewinde an ihrer einen Seite versehene Zentralbohrung einen Absatz aufweist, der den mit Gewinde versehenen Abschnitt von einem anderen Abschnitt trennt, der einen kleineren Durchmesser aufweist und in den die Radialbohrung mündet.

Der Flansch der Versorgungsleitung kann dadurch anders gestaltet werden, daß in einem mittleren Teil der den Flansch bildenden Ringscheibe eine Axialbohrung von der Radialbohrung einseitig abzweigt, daß die Radialbohrung an ihrem äußeren Ende durch eine Dichtung verschlossen ist und daß die abzweigende Axialbohrung ein Gewinde für den Anschluß einer Abzweigleitung, eines Ventiles und/oder eines Meßgerätes aufweist. Diese Ausgestaltung hat den Vorteil, daß das Ventil und das Meßgerät geschützt im Schatten des Flansches liegen.

Dabei besteht die Möglichkeit, daß die Radialbohrung durch eine sie abdichtende Schraube verschlossen ist, wobei die Dichtstelle zwischen dem Zentrum des Flansches und der abzweigenden Axialbohrung gelegen ist. Diese weitere Ausgestaltung hat den Vorteil, daß die Schraube nicht nur die Funktion einer Dichtung, sondern auch die Funktion eines Ventiles übernimmt. Als Schraube wird zweckmäßigerweise eine Inbusschraube verwendet, die Radialbohrung weist zweckmäßigerweise einen Querschnittssprung auf und dieser Querschnittssprung ist dabei konisch ausgebildet, sodaß dieser konisch ausgebildete Querschnittssprung zusammen mit dem konischen Ende der Schraube einen Dichtkonus bildet.

Das Wesen der Erfindung ist nachstehend anhand eines in der Zeichnung schematisch dargestellten Ausführungsbeispieles näher erläutert. Es zeigen:
- Fig.1: eine Ansicht einer Versorgungsleitung mit angebautem Meßgerät,

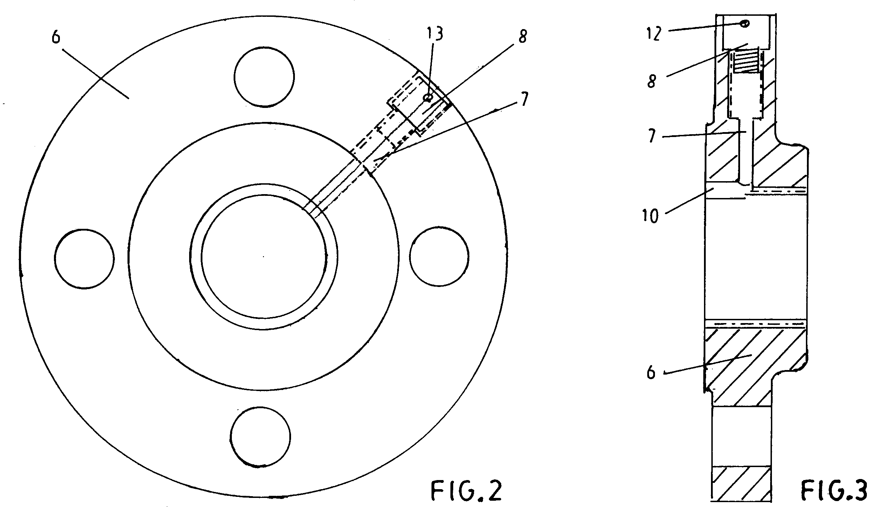

- Fig.2: eine Stirnseitenansicht des Flansches,
- Fig.3: einen Schnitt durch den Flansch,
- Fig.4: einen Schnitt durch einen Flansch mit eingesetztem Ventil,
- Fig.5: eine Ansicht des Ventiles,
- Fig.6: einen Schnitt durch eine andere Ausführungsform eines Flansches,
- Fig.7: einen Schnitt durch einen Flansch mit einer von der Radialbohrung abzweigenden Axialbohrung,
- Fig.8: einen Schnitt durch einen Flansch mit einer von der Radialbohrung abzweigenden Axialbohrung, bei der die die Radialbohrung verschließende Schraube die Funktion eines Ventiles übernimmt.

Die Versorgungsleitung besteht aus einzelnen Rohren 1, die an ihren Enden mit jeweils einem Flansch 6 versehen sind. Jeder Flansch 6 weist Löcher für Befestigungsmittel in Form von Schrauben 3 mit Muttern 4 auf. Zwischen je zwei Flanschen 6 befindet sich ein Dichtungsring 5.

Einer dieser Flansche ist in besonderer Weise gestaltet, um den Anschluß von Meßgeräten oder Meßgebern zu ermöglichen: Er weist eine Radialbohrung 7 auf, welche an ihrem äußeren Ende durch einen Stopfen 8 verschlossen ist, der nach Art einer Inbus- oder Torx-Schraube gestaltet ist und eine speziell für einen bestimmten Schlüssel geformte Ausnehmung 9 aufweist. Nach Entfernen des Stopfens 8 kann in das Gewinde der Bohrung 8 ein Druckmeßgerät eingeschraubt werden, mit dem der Druck im Inneren des Gasrohres gemessen werden kann. Denn die Radialbohrung 7 stellt eine direkte Verbindung zum Inneren des Gasrohres her, sei es, daß der Flansch an das Rohr angeschweißt ist, sei es, daß der Flansch auf das Rohrende aufgeschraubt ist. Wenn der Flansch 6 nicht mit der ganzen Länge seines Gewindes auf das Außengewinde des Rohres aufgeschraubt ist oder wenn das Innengewinde im Flansch sich nur über einen Teil der Tiefe der Zentralausnehmung im Flansch erstreckt (wobei der nicht mit einem Innengewinde versehene Teil zweckmäßigerweise einen etwas geringerern Durchmesser als der mit Gewinde versehene Teil hat und wobei die Radialbohrung 7 im nicht mit Gewinde versehenen Teil mündet) oder wenn in der Zentralausnehmung des Flansches 6 eine Nut 10 angeordnet ist, die sich von der Mündung der Radialbohrung 7 zu der dem Gasdruckreglergehäuse abgewandten Seite des Flansches erstreckt und innerhalb der Flanschdichtung 11 in den Raum zwischen Flansch und nicht dargestellten Gegenflansch eintritt. Diese Nut hat den weiteren Vorteil, Verfälschungen des Meßergebnisses durch Ejektoreffekte zu vermeiden.

Um ein unberechtigtes Öffnen der Radialbohrung 7 erkenntlich zu machen, besteht die Möglichkeit der Verplombung: Es befindet sich im Stopfen eine Querbohrung 12, welche gestrichelt dargestellt ist und die mit einer Querbohrung 13 im Flansch 6 fluchtet.

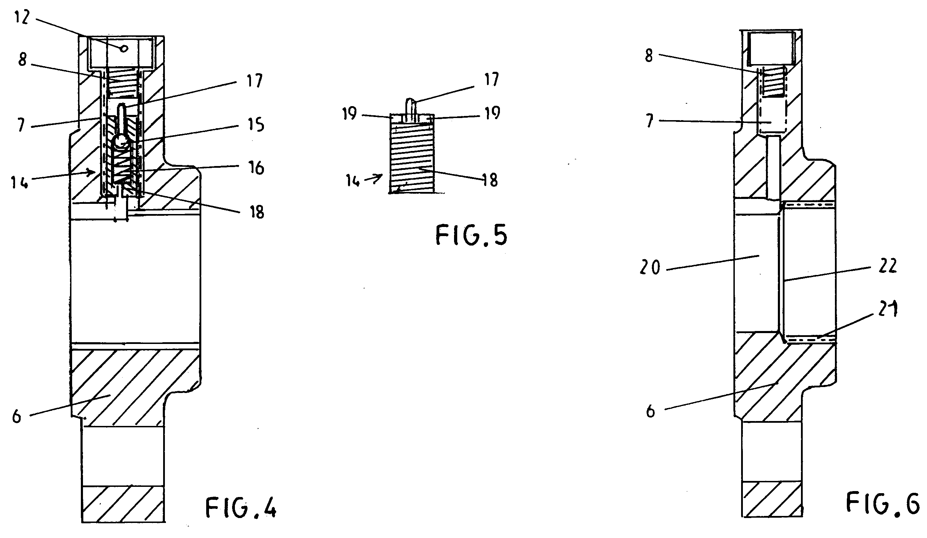

Wie die Fig. 4 zeigt, kann in die Radialbohrung 7 ein Ventil 14 eingesetzt sein, dessen Ventilkörper 15 durch die Feder 16 in seinen Sitz gedrückt ist und der einen Stößel 17 aufweist, durch dessen Eindrücken in das Ventilgehäuse 18 das Ventil geöffnet wird. Beidseits des Stößels 17 sind im Ventilgehäuse 18 Ausnehmungen 19 vorgesehen, in die ein Spezialschlüssel für das Einsetzen des Ventiles eingreift.

Eine weitere Ausführungsform eines Flansches ist in Fig. 6 gezeigt, die sich dadurch auszeichnet, daß die mit Gewinde 21 an ihrer einen Seite versehene Zentralbohrung 2o einen Absatz aufweist, der den mit Gewinde 21 versehenen Abschnitt von einem anderen Abschnitt trennt, der einen kleineren Durchmesser aufweist und in den die Radialbohrung 7 mündet.

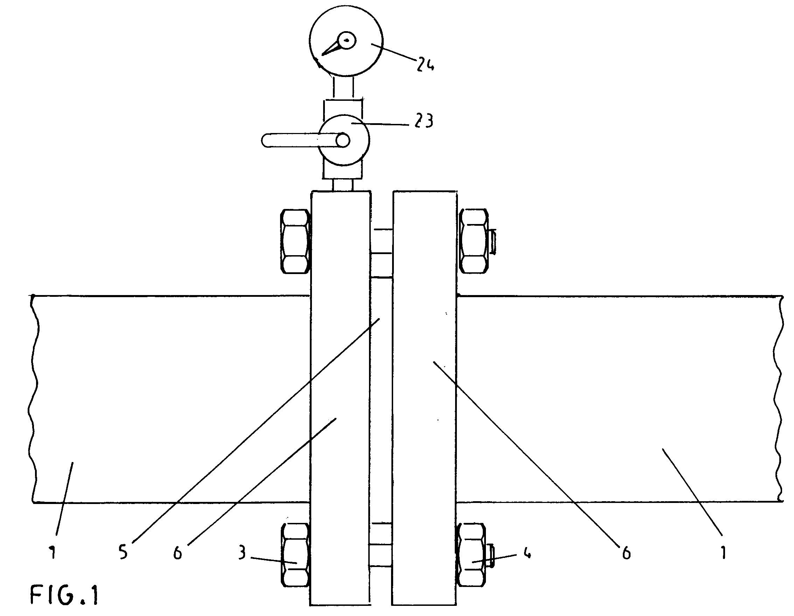

Im Ausführungsbeispiel der Fig.1 ist in das Innengewinde der Radialbohrung ein Kugelventil 23 eingesetzt, auf das ein Meßgerät 24 gesetzt ist.

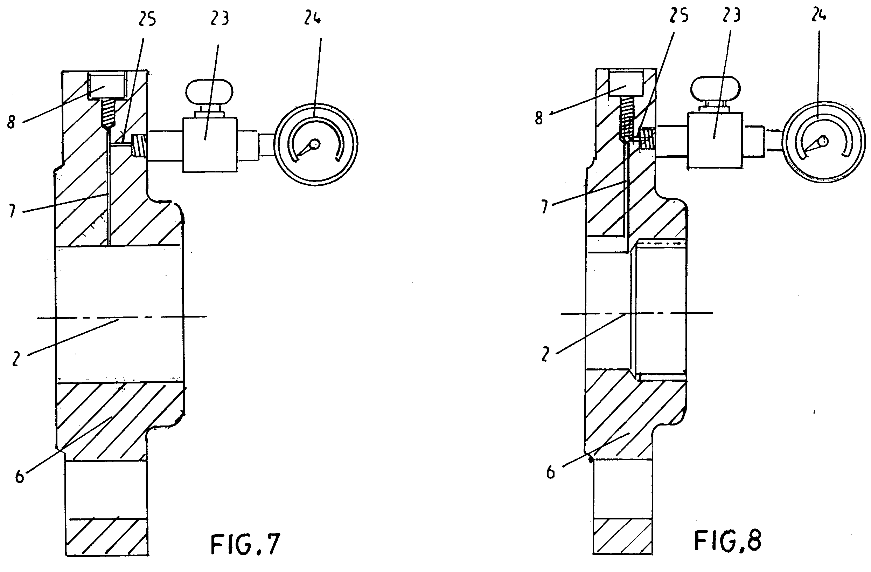

Wie die Fig.7 zeigt, kann der Flansch 6 der Versorgungsleitung dadurch anders gestaltet werden, daß in einem mittleren Teil der den Flansch 6 bildenden Ringscheibe eine Axialbohrung 25 von der Radialbohrung 7 einseitig abzweigt, daß die Radialbohrung 7 an ihrem äußeren Ende durch eine Dichtung 8 verschlossen ist und daß die abzweigende Axialbohrung 25 ein Gewinde für den Anschluß einer Abzweigleitung, eines Ventiles 23 und/oder eines Meßgerätes 24 aufweist. Diese Ausgestaltung hat den Vorteil, daß das Ventil 23 und das Meßgerät 24 geschützt im Schatten des Flansches 6 liegen.

Wie Fig.8 zeigt, besteht die Möglichkeit, daß die Radialbohrung 7 durch eine sie abdichtende Schraube 8 verschlossen ist, wobei die Dichtstelle zwischen dem Zentrum 2 des Flansches 6 und der abzweigenden Axialbohrung 25 gelegen ist. Diese weitere Ausgestaltung hat den Vorteil, daß die Schraube 8 nicht nur die Funktion einer Dichtung, sondern auch die Funktion eines Ventiles übernimmt. Als Schraube 8 wird zweckmäßigerweise eine Inbusschraube verwendet, die Radialbohrung weist zweckmäßigerweise einen Querschnittssprung auf und dieser Querschnittssprung ist dabei konisch ausgebildet, sodaß dieser konisch ausgebildete Querschnittssprung zusammen mit dem konischen Ende der Schraube einen Dichtkonus bildet.

### Liste der Bezugszeichen

- 1: Rohr
- 2: Zentrum
- 3: Schraube
- 4: Mutter
- 5: Dichtungsring
- 6: Flansch
- 7: Radialbohrung
- 8: Stopfen
- 9: Ausnehmung
- 10: Ausnehmung (Nut)
- 11: Flanschdichtung
- 12: Querbohrung
- 13: Querbohrung
- 14: Ventil
- 15: Ventilkörper
- 16: Feder
- 17: Stößel
- 18: Ventilgehäuse
- 19: Ausnehmung
- 20: Zentralbohrung
- 21: Gewinde
- 22: Absatz
- 23: Kugelventil
- 24: Meßgerät
- 25: Axialbohrung

## Patentansprüche

1. Versorgungsleitung, insbesondere Gasleitung, bestehend aus Rohren mit mindestens einem endseitig angeordneten Flansch, welcher mit Löchern für den Einbau von Flanschverbindungsmitteln versehen ist,
dadurch gekennzeichnet,
daß der Flansch (6) mit einer Radialbohrung (7) versehen ist, in deren Ende ein Innengewinde vorgesehen ist,
daß die Radialbohrung zwischen den Löchern für den Einbau von Flanschverbindungsmitteln verläuft
und daß die Radialbohrung (7) durch einen in das Innengewinde eingeschraubten Stopfen (8) verschlossen ist.

2. Versorgungsleitung nach Anspruch 1,
dadurch gekennzeichnet,
daß der Stopfen ein Verschlußstopfen ist.

3. Versorgungsleitung nach Anspruch 1,
dadurch gekennzeichnet,
daß der Stopfen eine Axialbohrung aufweist und ein mit Außengewinde versehenes Anschlußteil eines Ventiles, insbesondere eines Kugelhahnes, ist.

4. Versorgungsleitung nach Anspruch 1,
dadurch gekennzeichnet,
daß der Stopfen eine Axialbohrung aufweist und ein mit Außengewinde versehenes Anschlußteil eines Meßgerätes oder Meßgebers ist.

5. Versorgungsleitung nach Anspruch 1,
dadurch gekennzeichnet,
daß in die Innenwand des Flansches (6) eine sich durch die Mündung der Radialbohrung (7) achsparalell erstreckende Nut (10) eingearbeitet ist.

6. Versorgungsleitung nach Anspruch 1,
dadurch gekennzeichnet,
daß der Stopfen (8) und der Flansch (6) mit einer Bohrung (12,13) für das Durchziehen eines Plombendrahtes versehen sind.

7. Versorgungsleitung nach Anspruch 1,
dadurch gekennzeichnet,
daß der Stopfen (8) mit einer speziell geformten Ausnehmung (9) für das Einstecken eines speziell geformten Inbusschlüssels versehen ist.

8. Versorgungsleitung nach Anspruch 1,
dadurch gekennzeichnet,
daß in das Innengewinde der Radialbohrung (7) ein Ventil (14) so tief eingeschraubt ist, daß der Stopfen (8) ebenfalls in das Innengewinde einschraubbar ist.

9. Versorgungsleitung nach Anspruch 8,
dadurch gekennzeichnet,
daß der Ventilkörper (15) mit einem Stößel (17) für die Ventilöffnung versehen ist, der mit einem Ansatz an einem anstelle des Stopfens in das Innengewinde einschraubbaren Druckmeßgerät oder - geber verschiebbar ist.

10. Versorgungsleitung nach Anspruch 1,
dadurch gekennzeichnet,
daß die Radialbohrung (7) einen Absatz aufweist und daß in den schmaleren Teil ein Ventil (14) und in den breiteren Teil der Stopfen (8) eingeschraubt ist.

11. Versorgungsleitung nach Anspruch 1,
dadurch gekennzeichnet,
daß die Radialbohrung (7) den Durchmesser eines Haarröhrchens aufweist.

12. Versorgungsleitung nach Anspruch 1,
dadurch gekennzeichnet,
daß die Axialbohrung (2o) des Flansches einen Absatz (22) am Ort der Mündung der Radialbohrung aufweist,
und daß sich von der Radialbohrung axial eine Nut durch den Teil der Innenwand der Axialbohrung mit geringerem Durchmesser erstreckt.

13. Versorgungsleitung nach Anspruch 1,
dadurch gekennzeichnet,
daß in einem mittleren Teil der den Flansch (6) bildenden Ringscheibe eine Axialbohrung (25) von der Radialbohrung (7) einseitig abzweigt,
daß die Radialbohrung (7) an ihrem äußeren Ende durch eine Dichtung (8) verschlossen ist und daß die abzweigende Axialbohrung (25) ein Gewinde für den Anschluß einer Abzweigleitung, eines Ventiles (23) und/oder eines Meßgerätes (24) aufweist.

14. Versorgungsleitung nach Anspruch 13,
dadurch gekennzeichnet,
daß die Radialbohrung (7) durch eine sie abdichtende Schraube (8) verschlossen ist,
wobei die Dichtstelle zwischen dem Zentrum (2) des Flansches (6) und der abzweigenden Axialbohrung (25) gelegen ist.
